# EUROPEAN PATENT SPECIFICATION

(11) **EP 2 022 658 B1**
(45) Date of publication and mention of the grant of the patent: **29.02.2012**
(21) Application number: 08252530.4
(22) Date of filing: 24.07.2008
(51) Int. Cl.: B60K 11/04, B62M 7/12

(54) **Straddle-type vehicle**
Motorroller
Scooter

(30) Priority: 02.08.2007 JP 2007202181
(43) Date of publication of application: 11.02.2009
(73) Proprietor: Yamaha Hatsudoki Kabushiki Kaisha, Shizuoka-ken 438-8501 (JP)
(72) Inventor: Miyoshi, Nobuyuki, Iwata-shi, Shizuoka-ken 438-8501 (JP)
(74) Representative: Moreland, David

(56) References cited:
- JP-A- 61 016 130
- JP-A- 61 122 030
- JP-A- 2005 119 501
- US-A- 5 046 554
- US-A- 5 566 954

## Description

### FIELD OF THE INVENTION

The present invention relates to a straddle-type vehicle that includes a heat exchanger having a plate-shaped core that contacts outside air, a fan that is disposed to face the core and takes or draws in outside air, and a fan case that covers the fan and is disposed at a predetermined distance away from the heat exchanger.

### BACKGROUND TO THE INVENTION

In straddle-type vehicles such as motorcycles having a water-cooled engine, a heat exchanger is typically provided in order to lower the temperature of engine coolant (water). Known heat exchangers have plate-shaped cores arranged to be contacted with outside air. Outside air passing through the core removes the heat of the coolant inside.

In straddle-type vehicles that include a heat exchanger like that described above, a method that is widely used takes in outside air using a fan disposed to face the core of the heat exchanger. Such a vehicle according to the preamble of claim 1 is disclosed in, for example, JP-A-2005-119501. This improves the ability of a heat exchanger unit, which includes the heat exchanger and the fan, to cool the coolant (hereinafter referred to as the "cooling ability").

The fan is covered by a fan case. For the ease of installation, the fan case is fixed at a predetermined distance or clearance from the heat exchanger.

However, there is room for more improvement in the above-described known method that will improve the cooling ability of the heat exchanger unit.

Particularly, when the heat exchanger unit is positioned in a side of the vehicle, the running or traveling wind is less likely to hit the core of the heat exchanger, as compared to when the heat exchanger unit is positioned at the front of the vehicle. Therefore, it is desirable to improve the cooling ability of the heat exchanger unit, which can be achieved by using a fan to more reliably feed outside air taken in by the fan to the core of the heat exchanger.

The invention has been devised in light of the above-described circumstances. It is an object of an embodiment of the invention to provide a straddle-type vehicle with a heat exchanger unit with an improved cooling ability.

### SUMMARY OF THE INVENTION

According to the present invention there is provided a straddle-type vehicle according to claim 1.

According to the invention, the outside air taken in by the fan can be more reliably introduced to the core of the heat exchanger. Thus, it is possible to provide a heat exchanger unit with an improved cooling ability in a saddle type vehicle.

### BRIEF DESCRIPTION OF THE DRAWINGS

These and other aspects of the present invention will now be described, by way of example only, with reference to the accompanying drawings, in which:
FIG. 1 is a left side view of a motorcycle according to an embodiment of the invention;
FIG. 2 is a schematic cross sectional view of a swing type engine unit along the line A-A in FIG. 1;
FIG. 3 is an enlarged view of the vicinity of a radiator shown in FIG. 2;
FIG. 4 is a right side view of the radiator, a cylinder head, and a cylinder according to the embodiment of the invention;
FIG. 5 is a side view of the outside of a fan case according to the embodiment of the invention;
FIG. 6 is a side view of the inside of the fan case according to the embodiment of the invention;
FIG. 7 is a front view of the fan case and the radiator according to the embodiment of the invention;
FIG. 8 is a rear view of the fan case according to the embodiment of the invention;
FIG. 9 is a partially enlarged view of FIG. 6;
FIG. 10 is a view showing the structure of a closure section according to another embodiment; and
FIG. 11 is a view showing the structure of a closure section according to another embodiment.

### DETAILED DESCRIPTION OF THE DRAWINGS

Hereinafter, the structure of a straddle-type vehicle according to an embodiment of the invention will be described with reference to the appended drawings. More specifically, the (1) Overall schematic structure, (2) Structure of the swing type engine unit, (3) Operations and effects, and (4) Other embodiments will be described.

Note that, in the following drawings, structural members that are the same or similar are denoted with the same or similar reference numerals. Also note that the figures are schematic, and thus the reader should be aware that the relative scale of dimensions and the like might be different to the real object.

However, specific dimensions and the like may be determined based on reference to the following description. In addition, it will be readily apparent that the various figures include sections in which the relationship and scale of respective dimensions etc. are different.

### (1) Overall schematic structure

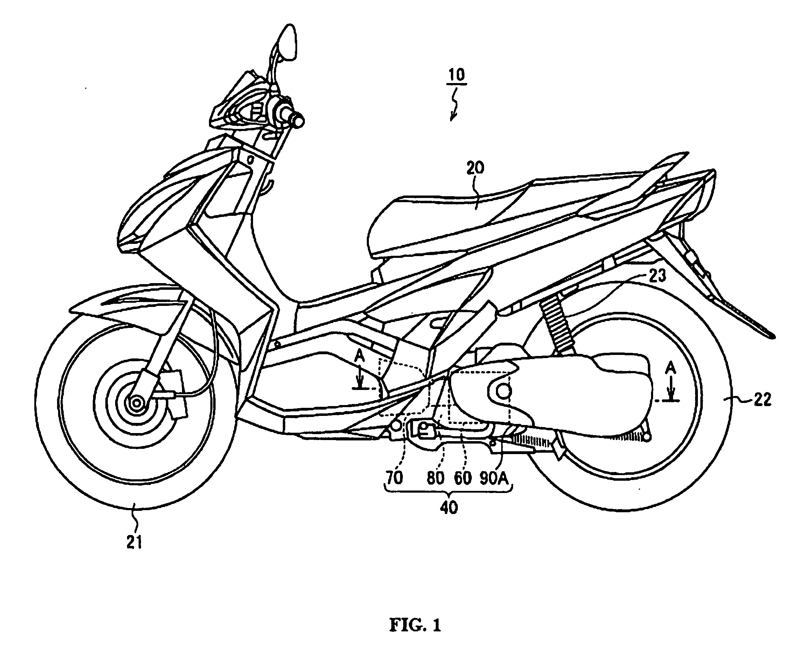

First, the overall schematic structure of the straddle-type vehicle according to the embodiment will be described. FIG. 1 is a left side view of a motorcycle 10 according to the embodiment.

As shown in FIG. 1, the motorcycle 10 is an underbone motorcycle in which a body frame (not shown in the figures) is disposed at a lower location than that of a normal motorcycle.

The motorcycle 10 includes a front wheel 21 and a rear wheel 22, and uses a swing type engine unit 40 to drive the rear wheel 22. The swing type engine unit 40 is provided below a seat 20 on which a rider sits, and extends in the front-rear direction of the vehicle.

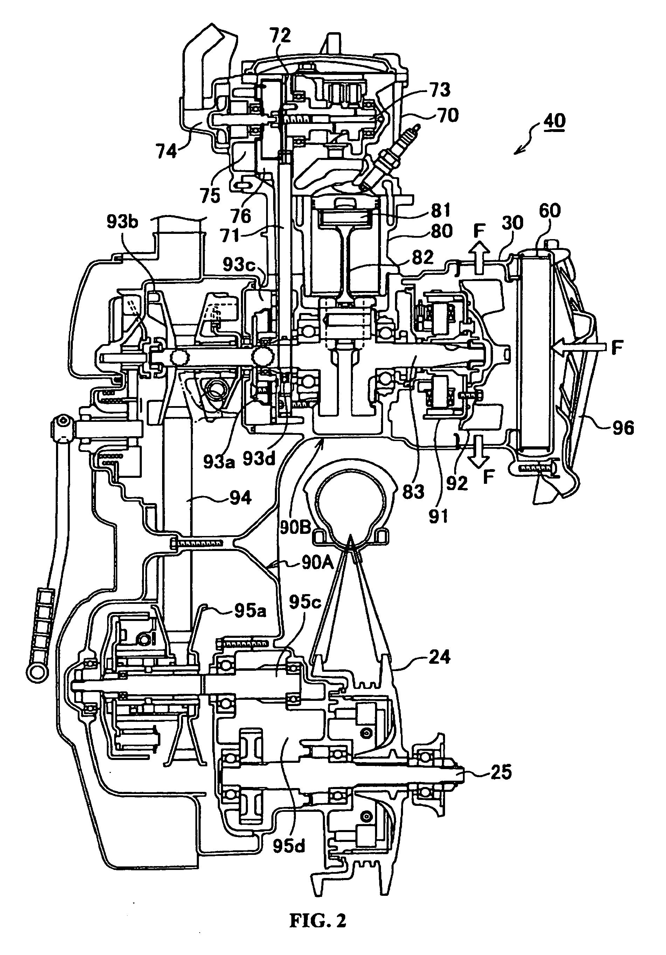

The swing type engine unit 40 includes a cylinder head 70, a cylinder 80 connected to the cylinder head 70, a crank case 90B (refer to FIG. 2) connected to the cylinder 80, and a transmission case 90A.

The swing type engine unit 40 is provided with a radiator 60 on the right side of the vehicle. In this embodiment, a water-cooled, single cylinder, four-stroke engine includes the cylinder head 70, the cylinder 80, and the radiator 60.

The transmission case 90A houses a transmission unit (not shown in the figures). The transmission unit transmits power generated by the engine including the cylinder head 70 and the cylinder 80 to the rear wheel 22.

An upper section of the transmission case 90A is provided with a cushion unit 23 that is fixed to the body frame. The body frame rotatably supports the lower side of a front section of the transmission case 90A. A rear section of the transmission case 90A can swing in the up-down direction of the vehicle.

### (2) Structure of the swing type engine unit

Next, the structure of the swing type engine unit 40 will be described with reference to FIG. 2 to FIG. 9. More specifically, the (2.1) Overall schematic structure of the swing type engine unit, (2.2) Structure of the vicinity of the radiator, (2.3) Detailed structures of the fan case, the radiator, and the closure section will be described.

### (2.1) Overall schematic structure of the swing type engine unit

FIG. 2 is a schematic cross sectional view of the swing type engine unit 40 along the line A-A in FIG. 1. Note that hatching is omitted in FIG. 2.

The cylinder 80 is provided on a vehicle centerline that divides the vehicle width into two substantially equal halves. The cylinder 80 includes a piston 81 and a connecting rod 82.

The piston 81 is inserted into the cylinder 80. The connecting rod 82 transmits the power of the piston 81 to a crank shaft 83.

The crank case 90B houses the crank shaft 83 disposed in the vehicle width direction.

The transmission case 90A houses a starter clutch 93a, a drive pulley 93b, a drive belt 94, a driven pulley 95a, a drive shaft 95c, a gear speed reduction mechanism 95d, etc.

The starter clutch 93a is connected to the crank shaft 83 on the left side of the vehicle centerline. The starter clutch 93a is housed in a starter clutch housing 93c.

The drive pulley 93b is connected to the crank shaft 83 on the left side of the starter clutch 93a. The driven pulley 95a is connected to the drive shaft 95c.

The drive belt 94 is wound around the drive pulley 93b and the driven pulley 95a. The drive pulley 93b, the drive belt 94 and the driven pulley 95a form a V-belt type automatic transmission mechanism.

A rear axle 25 is provided to the rear of the drive shaft 95c. The driving force of the crank shaft 83 is transmitted to the drive shaft 95c via the drive pulley 93b, the drive belt 94, and the driven pulley 95a, and then transmitted from the drive shaft 95c to the rear axle 25 via the gear speed reduction mechanism 95d.

The cylinder head 70 includes a cam shaft 73 that extends in the vehicle width direction. A cam sprocket 72 is fixed to one end of the cam shaft 73. A cam chain 71 is wound around a crank sprocket 93d fixed to the crank shaft 83, and the cam sprocket 72.

A cooling water pump 74 and a breather device 75 are provided on the left side of the cylinder head 70. The cooling water pump 74 feeds cooling water to cooling water passages provided in the radiator 60, the cylinder 80 etc.

Blow-by gas in the crank case 90B flows through a cam chain chamber 76 and flows into the breather device 75. The breather device 75 separates the blow-by gas into engine oil and air.

An alternator 91 is connected to the crank shaft 83 on the right side of the vehicle centerline. A fan 92 is fastened to the alternator 91.

The centrifugal fan 92 takes or draws in outside air F and subsequently discharges this air F that to the outside. A section of the fan 92 is covered by a fan case 30 that is fixed to the crank case 90B. In this embodiment, the fan case 30 is formed of an aluminum alloy.

The radiator 60 is provided on the right side of the fan 92, along the front-rear direction of the vehicle. The radiator 60 and the fan 92 form a radiator unit.

Rotation of the fan 92 causes the outside air F to be introduced via a radiator cover 96 and the radiator 60. The radiator 60 is filled with cooling water that cools the cylinder 80, and the cylinder head 70 etc. The outside air F introduced by the fan 92 cools the cooling water in the radiator 60.

The radiator cover 96 is made of plastic, and disposed on the right side of the radiator 60. The radiator cover 96 is fixed to the fan case 30, and covers the right side of the radiator 60.

### (2.2) Detailed structure in the vicinity of the radiator

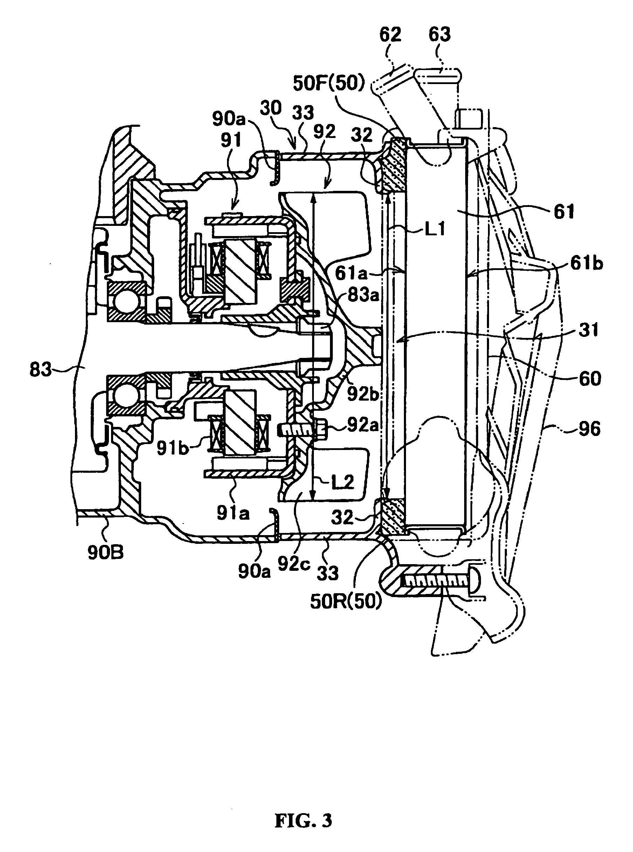

Next, the structure in the vicinity of the radiator 60 shown in FIG. 2, and more specifically, the structures of the alternator 91, the fan 92, and the radiator 60 will be described. FIG. 3 is an enlarged view in the vicinity of the radiator 60 shown in FIG. 2.

The alternator 91 includes a flywheel magnet rotor 91a and a magnet stator 91b. The flywheel magnet rotor 91a is fixed to a tip end of the crank shaft 83 with a nut 83a. The magnet stator 91b is fixed to the crank case 90B.

The fan 92 is fixed to a back surface of the flywheel magnet rotor 91a with a bolt 92a. The fan 92 and the flywheel magnet rotor 91a rotate along with rotation of the crank shaft 83.

To be more specific, a rotating shaft of the fan 92 is disposed coaxially with the crank shaft 83. The fan 92 has a disc-shaped rotor plate 92b, and a plurality of wings 92c. The wings 92c are provided on a surface of the rotor plate 92b on the radiator 60 side, along the rotating direction of the rotor plate 92b.

The fan case 30 is connected to the crank case 90B. An opening 31 that faces the radiator 60 is formed in the fan case 30. In this embodiment, a diameter L1 of the opening 31 is substantially the same as the outer diameter L2 of the fan 92.

The fan case 30 has a cylinder section 33 and an edge section 32. The cylinder section 33 is disposed on the outside of the rotating direction of the fan 92. The edge section 32 is contiguous with the cylinder section 33, and surrounds an outer edge of the opening 31.

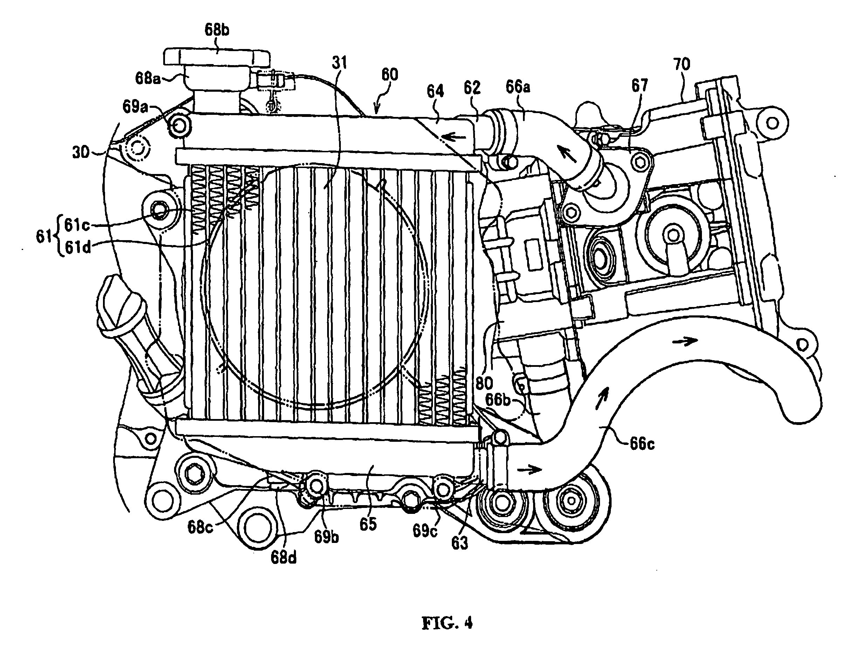

The radiator 60 includes a plate-shaped radiator core 61, an upper tank 64 (refer to FIG. 4) disposed on the upper side of the radiator core 61, and a lower tank 65 (refer to FIG. 4) disposed on the lower side of the radiator core 61. A suction pipe 62 is connected to the upper tank 64. A water discharge pipe 63 is connected to the lower tank 65.

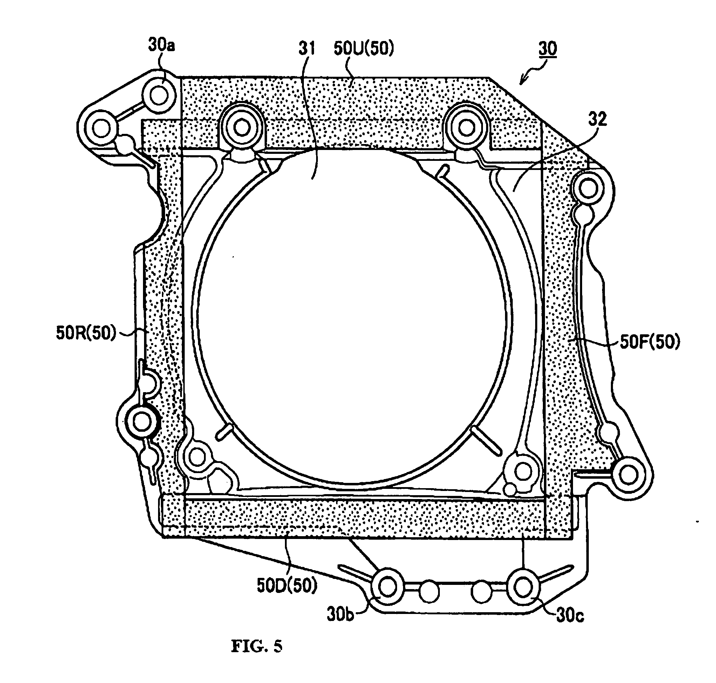

A closure section 50, more specifically, a front side closure section 50F, a rear side closure section 50R, an upper side closure section 50U, and a lower side closure section 50D are attached with adhesive to the edge section 32 of the fan case 30 (refer to FIG. 5).

In FIG. 3, the front side closure section 50F and the rear side closure section 50R attached with adhesive to the edge section 32 of the fan case 30 are tightly fitted to an inside surface 61a of the radiator core 61. More specifically, the front side closure section 50F and the rear side closure section 50R are tightly fitted to a front end section and a rear end section of the inside surface 61a, respectively.

In this manner, a gap between the edge section 32 of the fan case 30 and the radiator 60 is closed by the closure section 50.

When the fan 92 rotates along with the crank shaft 83, the outside air F on the outside of the radiator 60 in the vehicle width direction passes through the radiator core 61 and the opening 31 and is taken into the fan case 30.

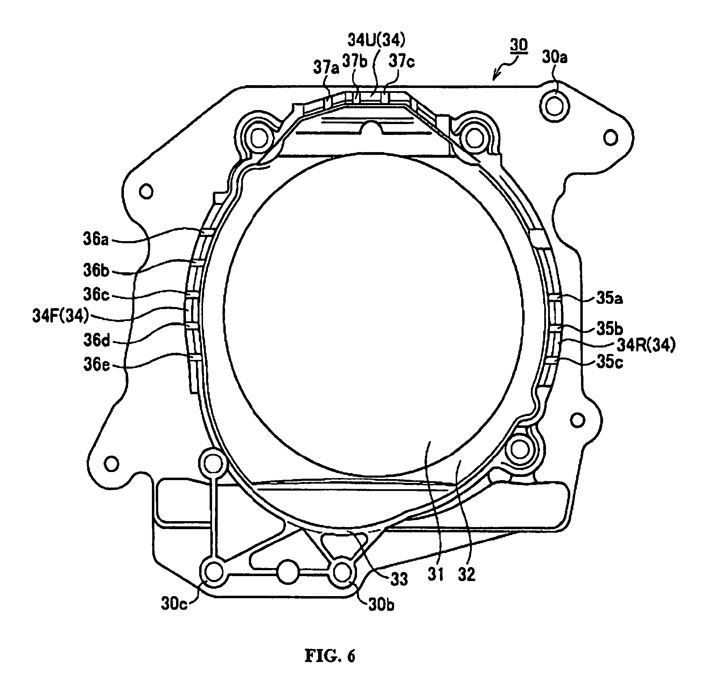

The outside air F that has been taken in is discharged to the outside of the fan 92 in the radial direction, via a discharge port 34 (refer to FIG. 6) formed in the fan case 30. Note that a protruding section 90a that extends from the crank case 90B toward the fan 92 is disposed on the inner side of the cylinder section 33 of the fan case 30. The outside air F is directed to the outside of the fan 92 in the radial direction by the edge section 32 and the protruding section 90a.

### (2.3) Detailed structures of the radiator, the fan case, and the closure section

Next, the detailed structures of the radiator 60, the fan case 30, and the closure section 50 will be described with reference to FIG. 4 to FIG. 9.

### (2.3.1) Detailed structure of the radiator

FIG. 4 is a right side view of the radiator 60, the cylinder head 70, and the cylinder 80.

The upper tank 64 and the lower tank 65 extend in the front-rear direction of the vehicle. The radiator core 61 connects the upper tank 64 and the lower tank 65.

The radiator core 61 includes fins 61c and water flow pipes 61d. The fins 61c and the water flow pipes 61d are formed of metal.

The water flow pipes 61d are disposed vertically, ie, in the vehicle up-down direction, at fixed intervals in the front-rear direction of the vehicle. Each fin 61c is disposed between the water flow pipes 61d, and produced by folding a sheet of metal a plurality of times.

A water supply port 68a for supplying cooling water is formed in a rear end section of the upper tank 64. The water supply port 68a is closed by a cap 68b.

A water discharge port 68c for discharging cooling water to the outside is formed in a rear section of the lower tank 65. The water discharge port 68c is closed by a lid 68d.

The water discharge pipe 63 connected to the lower tank 65 and the cooling water pump 74 disposed in the cylinder head 70 are connected via a cooling water pipe 66c. That is, the cooling water cooled by the radiator 60 is introduced to the cooling water pump 74.

The cooling water pump 74 and the cylinder 80 are connected via a cooling water pipe 66b. Thus, the cooling water fed by the cooling water pump 74 is introduced to a water jacket (not shown in the figures) inside the cylinder 80.

A thermostat 67 disposed on a right sidewall of the cylinder 80, and the upper tank 64 of the radiator 60 are connected via a cooling water pipe 66a. The cooling water heated by the cylinder 80 is fed to the upper tank 64.

Note that the radiator 60 has protrusions 69a to 69c for attaching the radiator 60 to the fan case 30 using bolts.

### (2.3.2) Detailed structure of the closure section

Next, the detailed structure of the closure section 50 will be described. FIG. 5 is a side view of the outside of the fan case 30.

As shown in FIG. 5, the front side closure section 50F and the rear side closure section 50R are attached with adhesive to the fan case 30 along the up-down direction of the vehicle. The front closure section 50F is provided corresponding to the front-end section of the radiator 60. The rear side closure section 50R is provided corresponding to the rear end section of the radiator 60.

The upper side closure section 50U and the lower side closure section 50D are attached with adhesive to the fan case 30 along the front-rear direction of the vehicle. The upper side closure section 50U is provided to correspond with the upper tank 64 of the radiator 60. The lower side closure section 50D is provided to correspond with the lower tank 65 of the radiator 60.

Note that, in the radiator 60, the thickness of the radiator core 61 in the vehicle width direction is smaller than the thickness of the upper tank 64 and the lower tank 65 in the vehicle width direction. In addition, in order to reliably close the gap between the radiator 60 and the fan case 30, it is desirable that the thickness of the closure section 50 is set to correspond to the size of the gap. Accordingly, the thickness of the front side closure section 50F and the rear side closure section 50R may be larger than the thickness of the upper side closure section 50U and the lower side closure section 50D.

Further, the fan case 30 includes boss sections 30a to 30c that are provided to correspond with the protrusions 69a to 69c of the radiator 60.

### (2.3.3) Detailed structure of the fan case

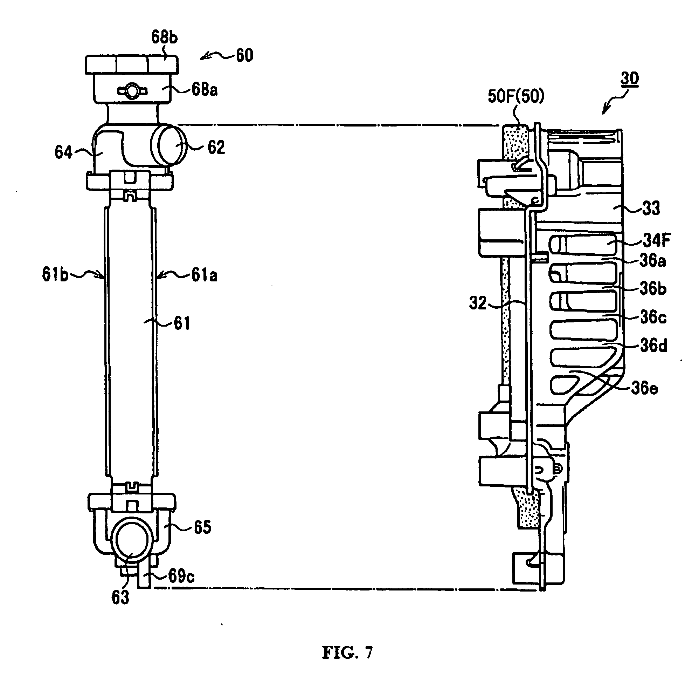

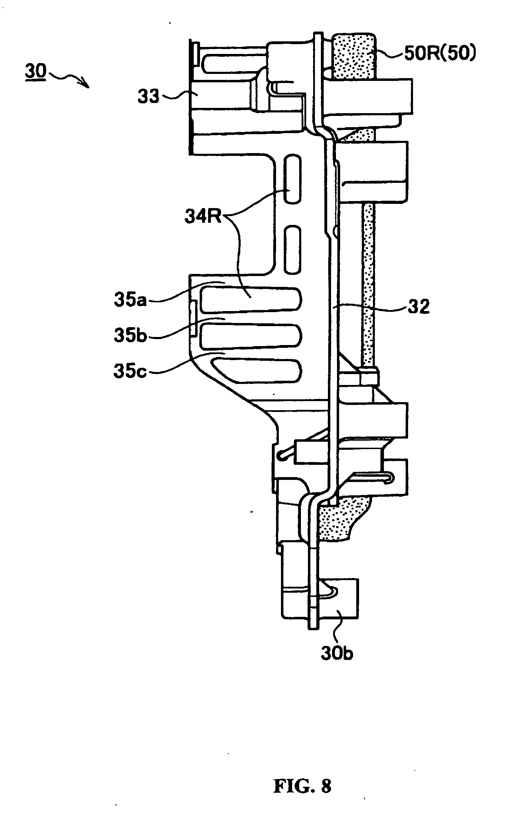

Next, the detailed structure of the fan case 30 will be described. FIG. 6 is a side view of the inside of the fan case 30. FIG. 7 is a front view of the fan case 30 and the radiator 60. Note that FIG. 7 shows a state where the radiator 60 has been removed from the fan case 30. FIG. 8 is a rear view of the fan case 30.

A front side discharge port 34F, an upper side discharge port 34U, and a rear side discharge port 34R are formed in the cylinder section 33 of the fan case 30.

The front side discharge port 34F is formed in a front section of the cylinder section 33. The front side discharge port 34F is provided with a plurality of rod-like sections 36a to 36e at fixed intervals apart in order to prevent foreign matter from entering.

The upper side discharge port 34U is formed in an upper section of the cylinder section 33. As shown in FIG. 6, the upper side discharge port 34U is provided with a plurality of rod-like sections 37a to 37c at fixed intervals apart.

The rear side discharge port 34R is formed in a rear section of the cylinder section 33. As shown in FIG. 6 and FIG. 8, the rear side discharge port 34R is provided with a plurality of rod-like sections 35a to 35c at fixed intervals apart.

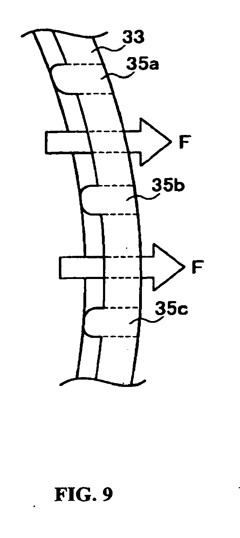

FIG. 9 is an enlarged plan view of the rod-like sections 35a to 35c provided in the rear side discharge port 34R.

As shown in FIG. 9, the rod-like sections 35a to 35c are formed to have a convex shape that extends in the direction of discharge of outside air F. As a result, turbulence of the flow of the discharged outside air F is inhibited. Accordingly, flow noise caused by the turbulence of the flow of the discharged outside air F is reduced.

### (3) Operations and effects

As described above, according to the embodiment, the motorcycle 10 includes the radiator 60 having the plate-shaped radiator core 61 that contacts the outside air F, the fan 92 that is disposed to face the radiator core 61 and takes or draws in the outside air F, and the fan case 30 that covers the fan 92 and is disposed at a predetermined distance away from the radiator 60.

The opening 31 is formed in the fan case 30 such that it faces the radiator core 61. The fan case 30 includes the edge section 32 that surrounds the outer edge of the opening 31, and the closure section 50 that closes the gap between the edge section 32 and the radiator 60.

Accordingly, the outside air F taken in by the fan 92 hardly passes through the gap between the edge section of the fan case 30 and the radiator 60. In other words, the outside air F taken in by the fan 92 is more reliably fed to the radiator core 61. As a result, the cooling ability of the radiator unit can be improved.

Further, according to the embodiment, the closure section 50 is formed by urethane. Accordingly, even if the closure section 50 is tightly fitted to the radiator core 61, damage to the radiator core 61 (more specifically, the fins 61c), which has a relatively low strength, can be inhibited.

According to the embodiment, the closure section 50 is attached with adhesive to the edge section 32 of the fan case 30. The temperature of the radiator 60 becomes high because the cooling water at a high temperature is introduced from the cylinder 80. Accordingly, when the closure section 50 is attached using adhesive to the radiator 60, there is a possibility that the closure section 50 will detach from the radiator 60. On the other hand, when the closure section 50 is attached with adhesive to the edge section 32 of the fan case 30 as in the embodiment, the possibility that the closure section 50 will detach from the edge section 32 of the fan case 30 is reduced.

In addition, according to the embodiment, an outside surface 61b of the radiator core 61 is disposed toward the outside in the vehicle width direction. That is, the radiator 60 is disposed at a location where running wind hardly hits the radiator 60. As a result of providing the above-described closure section 50 in a structure where the radiator 60 is disposed at the location where running wind hardly hits it, the cooling ability of the radiator unit can be significantly increased.

According to the embodiment, the diameter L1 of the opening 31 formed in the fan case 30 is substantially the same as the outer diameter L2 of the fan 92. Accordingly, while the outside air F discharged to the outside by the fan 92 is inhibited from leaking to the radiator 60 side, the amount of the outside air F introduced to the inside by the fan 92 can be increased. Thus, the cooling ability of the radiator unit can be improved.

### (4) Other Embodiments

Hereinabove, one embodiment of the invention is described. However, it is to be understood that the invention is not limited by the description and the drawings that constitute one section of the disclosure. From the disclosure, it will be apparent to those skilled in the art that the invention permits various alternative embodiments, examples and operation technologies.

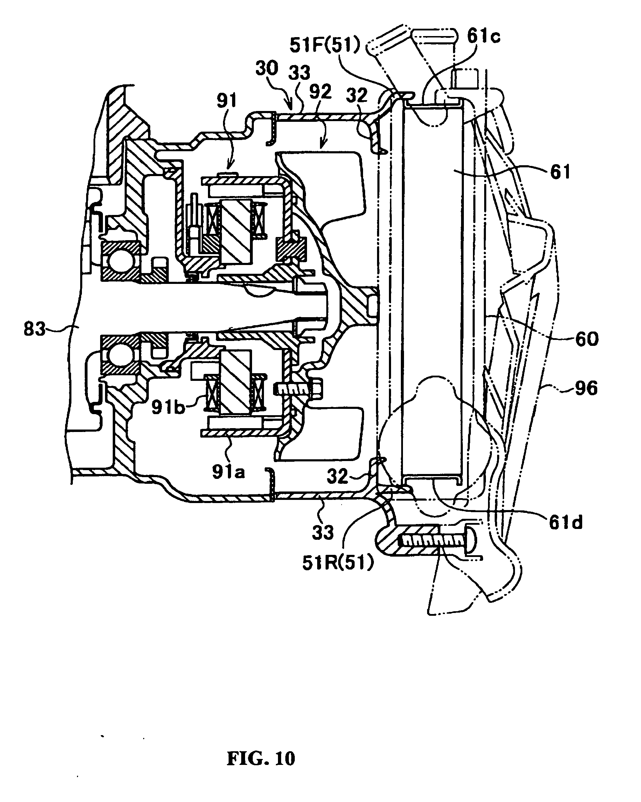

Although the closure section 50 is attached using adhesive to the edge section 32 of the fan case 30 in the above-described embodiment, the closure section 50 and the edge section 32 may be provided as a unit. In the example shown in FIG. 10, a closure section 51 (a front side closure section 51F and a rear side closure section 51R) extends from the edge section 32 toward the outside in the vehicle width direction. More specifically, the front side closure section 51F extends from the edge section 32 to the front end of the radiator core 61. The rear side closure section 51R extends from the edge section 32 to the rear end of the radiator core 61.

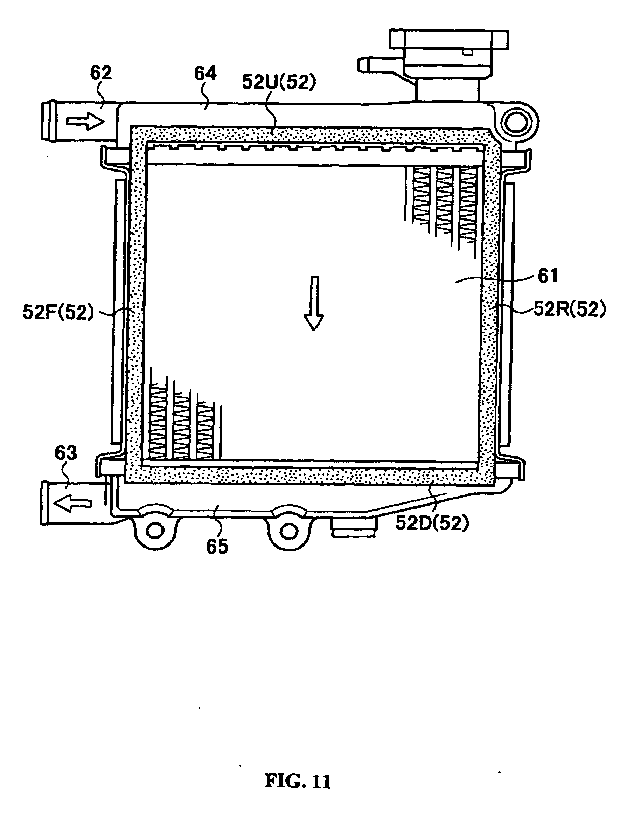

Moreover, although the closure section 50 is attached with adhesive to the edge section 32 of the fan case 30 in the above-described embodiment, a closure section 52 may be attached to the radiator 60 with adhesive as shown in FIG. 11. In FIG. 11, the closure section 52 is attached with adhesive to an outer edge section of the inside surface of the radiator 60.

Although the closure section 50 is formed of urethane in the above-described embodiment, it may be formed of other materials. For example, as the material of the closure section 50, an elastic member made of polystyrene foam (a foaming material) or rubber may be used.

In the above-described embodiment, a structure is described in which the closure section 50 is provided in the radiator unit including the radiator 60 and the fan 92. However, the structure in which the closure section 50 is provided may be applied to another heat exchanger, such as an oil cooler.

Moreover, in the above-described embodiment, the radiator 60 is provided in a side section of the vehicle, more specifically, on the right side of the vehicle. However, instead of the side section of the vehicle, the radiator 60 may be provided, for example, in a rear section of the vehicle. That is, if the closure section 50 according to the above-described embodiment is provided in a structure where the radiator unit is disposed at a location where running wind hardly hits it, the cooling ability of the radiator unit can be improved.

Note that, also in a structure where the radiator unit is disposed at a location where running wind directly hits it, for example, in a front section of the vehicle, it is readily apparent that the cooling ability of the radiator unit can be improved by providing the closure section 50 according to the above-described embodiment.

As will be readily apparent, the invention includes various embodiments not described here. Accordingly, the invention is defined only by the specific features of the invention set forth in the claims that are reasonable given the above description.

### Description of the Reference Numerals and Signs

10 ... Motorcycle, 20 ... Seat, 21 ... Front wheel, 22 ... Rear wheel, 23 ... Cushion unit, 25 ... Rear wheel, 30 ... Fan case, 30a to 30c ... Boss sections, 31 ... Opening, 32 ... Edge section, 33 ... Cylinder section, 34... Discharge port, 34F ... Front side discharge port, 34R ... Rear side discharge port, 34U ... Upper side discharge port, 35R ... Rear side discharge port, 35a to 35c, 36a to 36e, 37a to 37c ... Rod-like sections, 40 ... Swing type engine unit, 50, 51, 52 ... Closure sections, 50D ... Lower side closure section, 50F, 51F ... Front side closure sections, 50R, 51R ... Rear side closure sections, 50U ... Upper side closure section, 60 ... Radiator, 61 ... Radiator core, 61a ... Inside surface, 61b ... Outside surface, 61c ... Fins, 61d ... Water flow pipes, 62 ... Suction pipe, 63 ... water discharge pipe, 64 ... Upper tank, 65 ... Lower tank, 66a to 66c ... Cooling water pipe, 67 ... Thermostat, 68a ... Water supply port, 68b ... Cap, 68c ... Water discharge port, 68d ... Lid, 69a to 69c ... Protrusions, 70 ... Cylinder head, 71 ... Cam chain, 72 ... Cam sprocket, 73 ... Cam shaft, 74 ... Cooling water pump, 75 ... Breather device, 76 ... Cam chain chamber, 80 ... Cylinder, 81 ... Piston, 82 ... Connecting rod, 83 ... Crank shaft, 83a ... Nut, 90A ... Transmission case, 90B ... Crank case, 90a ... Protruding section, 91 ... Alternator, 91a ... Flywheel magnet rotor, 91b ... Magnet stator, 92 ... Fan, 92a ... Bolt, 92b ... Rotor plate, 92c ... Radiator, 92c ... Wings, 93a ... Starter clutch, 93b ... Drive pulley, 93c ... Starter clutch housing, 93d ... Crank sprocket, 94 ... Drive belt, 95a ... Driven pulley, 95c ... Drive shaft, 95d ... Gear speed reduction mechanism, 96 ... Radiator cover

## Claims

1. A straddle-type vehicle (10) comprising:
a crank shaft (83) disposed in a vehicle width direction;
a crank case (90B) arranged to house the crank shaft (83);
a heat exchanger (60) disposed on one side of the crank case (90B) in the vehicle width direction and including a core (61) adapted to contact outside air (F);
a fan (92) fixed to an end of the crank shaft (83) and arranged to face the core (61) and draw in outside air (F); and
a fan case (30) disposed on the one side of the crank case (90B) in the vehicle width direction, fixed to the crank case (90B), arranged to cover the fan (92) and being disposed at a predetermined distance away from the heat exchanger (60), wherein the fan case (30) defines an opening (31) that faces the core (61), and includes an edge section (32) that surrounds an outer edge of the opening (31),
wherein the core (61) includes an inside surface (61a) vertical to the crank shaft (83) and facing the fan (92) and an opposing outside surface (61b), wherein the outside surface (61b) is positioned to face in a direction other than a forward direction of the vehicle (10);
the heat exchanger (60) has protrusions (69a to 69c) for attaching the heat exchanger (60) to the fan case (30) using bolts; **characterised in that**
one of the fan case (30) and the heat exchanger (60) includes a closure section (50) that closes a gap between the edge section (32) and the heat exchanger (60); and
the closure section (50) is formed of an elastic member and arranged to be in contact with the inside surface (61a).

2. The straddle-type vehicle (10) according to claim 1 wherein the closure section (50) is adhesively attached to the edge section (32).

3. The straddle-type vehicle (10) according to and preceding claim, wherein the outside surface (61b) is disposed to face toward an outside in the vehicle width direction.

4. The straddle-type vehicle (10) according to any preceding claim, wherein a diameter (L1) of the opening (31) is substantially the same as the outer diameter (L2) of the fan (92).

5. The straddle-type vehicle (10) according to any preceding claim, wherein the fan case (30) is formed of any aluminium alloy.

6. The straddle type vehicle (10) according to any preceding claim further comprising:
a protruding section (90a) disposed on an inner side of the fan case (30) and extending from the crank case (90a) coward the fan (92).

## Patentansprüche

1. Grätschsitz-Fahrzeug (10), das aufweist:
eine Kurbelwelle (83), die in einer Breitenrichtung des Fahrzeuges angeordnet ist;
ein Kurbelgehäuse (90B), dazu ausgebildet, die Kurbelwelle (83) aufzunehmen;
einen Wärmetauscher (60), der auf einer Seite des Kurbelgehäuses (90B) in der Breitenrichtung des Fahrzeuges angeordnet ist und einen Block (61) umfasst, der ausgebildet ist, um die Außenluft (F) zu kontaktieren;
ein Gebläse (92), das an einem Ende der Kurbelwelle (83) befestigt und so angeordnet ist, dass es zum Block (61) hin liegt und die Außenluft (F) ansaugt; und
ein Gebläsegehäuse (30), das auf der einen Seite des Kurbelgehäuses (90B) in der Breitenrichtung des Fahrzeuges angeordnet ist, befestigt am Kurbelgehäuse (90B), dazu ausgebildet, dass das Gebläse (92) bedeckt wird, und wobei es mit einem vorgegebenen Abstand weg vom Wärmetauscher (60) angeordnet ist, wobei das Gebläsegehäuse (30) eine Öffnung (31) definiert, die zum Block (61) hin liegt, und einen Randabschnitt (32) umfasst, der einen Außenrand der Öffnung (31) umgibt,
wobei der Block (61) eine Innenfläche (61a) vertikal zur Kurbelwelle (83) und zum Gebläse (92) hin liegend und eine entgegengesetzte Außenfläche (61b) umfasst, wobei die Außenfläche (61b) so positioniert ist, dass sie in einer Richtung außer einer Vorwärtsrichtung des Fahrzeuges (10) liegt;
wobei der Wärmetauscher (60) Vorsprünge (69a bis 69c) für das Befestigen des Wärmetauschers (60) am Gebläsegehäuse (30) bei Verwendung von Schrauben aufweist; **dadurch gekennzeichnet, dass**
eines von Gebläsegehäuse (30) und Wärmetauscher (60) einen Verschlussabschnitt (50) umfasst, der einen Spalt zwischen dem Randabschnitt (32) und dem Wärmetauscher (60) verschließt; und
der Verschlussabschnitt (50) aus einem elastischen Element gebildet wird und dazu ausgebildet ist, mit der Innenfläche (61 a) in Kontakt zu kommen.

2. Grätschsitz-Fahrzeug (10) nach Anspruch 1, bei dem der Verschlussabschnitt (50) adhäsiv am Randabschnitt (32) befestigt ist.

3. Grätschsitz-Fahrzeug (10) nach einem der vorhergehenden Ansprüche, bei dem die Außenfläche (61b) so angeordnet ist, dass sie in Richtung einer Außenseite in der Breitenrichtung des Fahrzeuges liegt.

4. Grätschsitz-Fahrzeug (10) nach einem der vorhergehenden Ansprüche, bei dem ein Durchmesser (L1) der Öffnung (31) im Wesentlichen der gleiche ist wie der Außendurchmesser (L2) des Gebläses (92).

5. Grätschsitz-Fahrzeug (10) nach einem der vorhergehenden Ansprüche, bei dem das Gebläsegehäuse (30) aus einer Aluminiumlegierung hergestellt ist.

6. Grätschsitz-Fahrzeug (10) nach einem der vorhergehenden Ansprüche, das außerdem aufweist:
einen vorstehenden Abschnitt (90a), der auf einer Innenseite des Gebläsegehäuses (30) angeordnet ist und sich vom Kurbelgehäuse (90B) in Richtung des Gebläses (92) erstreckt.

## Revendications

1. Véhicule du type à enfourcher (10), comprenant :
un vilebrequin (83), agencé dans une direction de la largeur du véhicule ;
un carter de moteur (90B), destiné à recevoir le vilebrequin (83) ;
un échangeur de chaleur (60), agencé sur un côté du carter du moteur (90B) dans la direction de la largeur du véhicule, et englobant un noyau (61) adapté pour contacter l'air extérieur (F) ;
un ventilateur (92), fixé sur une extrémité du vilebrequin (83) et agencé de sorte à faire face au noyau (61) et à aspirer l'air extérieur (F) ; et
un carter de ventilateur (30), agencé sur un côté du carter du moteur (90B) dans la direction de la largeur du véhicule, fixé sur le carter du moteur (90B), agencé de sorte à recouvrir le ventilateur (92) et positionné à une distance prédéterminée à l'écart de l'échangeur de chaleur (60), le carter du ventilateur (30) définissant une ouverture (31) faisant face au noyau (61), et englobant une section de bordure (32) entourant un bord externe de l'ouverture (31) ;
le noyau (61) englobant une surface interne (61a) verticale par rapport au vilebrequin (83) et faisant face au ventilateur (92), et une surface externe opposée (61b), la surface externe (61b) étant positionnée de sorte à être orientée dans une direction autre qu'une direction allant vers l'avant du véhicule (10) ;
l'échangeur de chaleur (60) comportant des saillies (69a à 69c) pour fixer l'échangeur de chaleur (60) sur le carter du ventilateur (30) par l'intermédiaire de boulons ; **caractérisé en ce que**
un élément, le carter du ventilateur (30) ou l'échangeur de chaleur (60), englobe une section de fermeture (50), fermant un espace entre la section de bordure (32) et l'échangeur de chaleur (60) ; et
la section de fermeture (50) est constituée par un élément élastique et est agencée de sorte à être en contact avec la surface interne (61a).

2. Véhicule du type à enfourcher (10) selon la revendication 1, dans lequel la section de fermeture (50) est fixée de manière adhésive sur la section de bordure (32).

3. Véhicule du type à enfourcher (10) selon l'une quelconque des revendications précédentes, dans lequel la surface externe (61 b) est agencée de sorte à être orientée vers l'extérieur dans la direction de la largeur du véhicule.

4. Véhicule du type à enfourcher (10) selon l'une quelconque des revendications précédentes, dans lequel un diamètre (L1) de l'ouverture (31) est pratiquement identique au diamètre extérieur (L2) du ventilateur (92).

5. Véhicule du type à enfourcher (10) selon l'une quelconque des revendications précédentes, dans lequel le carter du ventilateur (30) est composé d'un alliage d'aluminium.

6. Véhicule du type à enfourcher (10) selon l'une quelconque des revendications précédentes, comprenant en outre :
une section en saillie (90a), agencée sur un côté interne du carter du ventilateur (30) et s'étendant du carter du moteur (90B) vers le ventilateur (92).
